# EUROPÄISCHE PATENTANMELDUNG

(11) **EP 3 277 008 A1**
(43) Veröffentlichungstag der Anmeldung: **31.01.2018**
(21) Anmeldenummer: 16182096.4
(22) Anmeldetag: 29.07.2016
(51) Int. Cl.: H04W 12/06, H04W 12/04, H04W 8/20, H04L 29/06

(54) **TEILNEHMERIDENTITÄTSELEMENT ZUM AUTHENTIFIZIEREN EINES KOMMUNIKATIONSGERÄTES GEGENÜBER EINEM KOMMUNIKATIONSNETZWERK**

(71) Anmelder: Deutsche Telekom AG, 53113 Bonn (DE)
(72) Erfinder: Sonntag, Dr. Thomas, 53343 Wachtberg (DE)
(74) Vertreter: Patentship Patentanwaltsgesellschaft mbH

(57) **Zusammenfassung**

Die Erfindung betrifft ein Teilnehmeridentitätselement (100) zum Authentifizieren eines Kommunikationsgerätes gegenüber einem Kommunikationsnetzwerk. Das Kommunikationsnetzwerk umfasst ein Subnetzwerk mit einem Profil-Server. Das Teilnehmeridentitätselement (100) umfasst einen Speicher (101), in welchem ein Initialisierungsprofil des Teilnehmeridentitätselements (100) gespeichert ist, wobei das Initialisierungsprofil eine Subnetzwerkkennung des Subnetzwerks anzeigt. Das Teilnehmeridentitätselement (100) umfasst ferner eine Kommunikationsschnittstelle (103), welche ausgebildet ist, eine Kommunikationsverbindung zu dem Profil-Server unter Verwendung der Subnetzwerkkennung aufzubauen, und ein Teilnehmerprofil von dem Profil-Server über die Kommunikationsverbindung abzurufen.

## Beschreibung

### TECHNISCHES GEBIET

Die vorliegende Erfindung betrifft das Gebiet der Kommunikationstechnik, insbesondere der Authentifizierung eines Kommunikationsgerätes gegenüber einem Kommunikationsnetzwerk.

### TECHNISCHER HINTERGRUND

Die Authentifizierung von Kommunikationsgeräten, beispielsweise von Mobiltelefonen, gegenüber einem Kommunikationsnetzwerk erfolgt in der Regel unter Verwendung von Teilnehmeridentitätselementen. Die Teilnehmeridentitätselemente sind hierbei ausgebildet, Daten zu speichern, welche das jeweilige Kommunikationsgerät eindeutig identifizieren.

Bei Kommunikationsgeräten nach dem GSM-Standard (Global System for Mobile Communications) kommen beispielsweise Teilnehmeridentitätselemente in Form von Chipkarten zum Einsatz, welche auch als SIM (Subscriber Identity Module) bezeichnet werden. Diese umfassen beispielsweise eine IMSI (International Mobile Subscriber Identity), welche einem Benutzer des Kommunikationsgerätes zugeordnet ist und zur Authentifizierung des Kommunikationsgerätes gegenüber dem Kommunikationsnetzwerk verwendet wird.

In Kommunikationsnetzwerken der fünften Generation (5G) und weiteren Generationen ist vorgesehen, Teilnehmeridentitätselemente jeweils fest in den Kommunikationsgeräten zu integrieren und die jeweiligen Daten zum Identifizieren und Authentifizieren in Form von Teilnehmerprofilen über das Kommunikationsnetzwerk bereitzustellen.

### BESCHREIBUNG DER ERFINDUNG

Es ist eine Aufgabe der vorliegenden Erfindung, ein effizientes Konzept zum Initialisieren eines Teilnehmeridentitätselementes eines Kommunikationsgerätes zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch ein Teilnehmeridentitätselement gelöst werden kann, welches mit einem Profil-Server eines Kommunikationsnetzwerkes kommunizieren kann. Der Profil -Server ist dabei einem Subnetzwerk des Kommunikationsnetzwerkes zugeordnet, wobei der Profil -Server unter Verwendung einer Subnetzwerkkennung des Subnetzwerkes erreichbar ist.

Das Teilnehmeridentitätselement ist ausgebildet, eine Kommunikationsverbindung zu dem Profil-Server unter Verwendung der Subnetzwerkkennung aufzubauen, und ein Teilnehmerprofil von dem Profil-Server abzurufen. Das Teilnehmerprofil umfasst dabei Daten, welche zum Identifizieren und Authentifizieren des Kommunikationsgerätes gegenüber dem Kommunikationsnetzwerk verwendet werden können.

Dadurch wird erreicht, dass ein dediziertes Subnetzwerk mit einem Profil-Server bereitgestellt werden kann, um einem Teilnehmeridentitätselement ein Teilnehmerprofil zuzuweisen. Das Subnetzwerk kann beispielsweise ein Slice des Kommunikationsnetzwerkes sein.

Gemäß einem ersten Aspekt betrifft die Erfindung ein Teilnehmeridentitätselement zum Authentifizieren eines Kommunikationsgerätes gegenüber einem Kommunikationsnetzwerk, wobei das Kommunikationsnetzwerk ein Subnetzwerk mit einem Profil-Server umfasst. Das Teilnehmeridentitätselement umfasst einen Speicher, in welchem ein Initialisierungsprofil des Teilnehmeridentitätselements gespeichert ist, wobei das Initialisierungsprofil eine Subnetzwerkkennung des Subnetzwerks anzeigt. Das Teilnehmeridentitätselement umfasst ferner eine Kommunikationsschnittstelle, welche ausgebildet ist, eine Kommunikationsverbindung zu dem Profil-Server unter Verwendung der Subnetzwerkkennung aufzubauen, und ein Teilnehmerprofil von dem Profil-Server über die Kommunikationsverbindung abzurufen. Das Teilnehmeridentitätselement kann eine eSIM (embedded SIM), eine UICC (Universal Integrated Circuit Card) oder eine eUICC (embedded Universal Integrated Circuit Card) sein.

Gemäß einer Ausführungsform ist dem Profil-Server eine Profil-Serverkennung zugeordnet, wobei das Initialisierungsprofil ferner die Profil-Serverkennung anzeigt, und wobei die Kommunikationsschnittstelle ferner ausgebildet ist, die Kommunikationsverbindung zu dem Profil-Server unter Verwendung der Profil-Serverkennung aufzubauen.

Gemäß einer Ausführungsform ist die Profil-Serverkennung ein Uniform Resource Identifier (URI) des Profil-Servers.

Gemäß einer Ausführungsform ist dem Teilnehmeridentitätselement eine Teilnehmeridentitätskennung zugeordnet, wobei die Kommunikationsschnittstelle ausgebildet ist, die Teilnehmeridentitätskennung an den Profil-Server über die Kommunikationsverbindung auszusenden. Die Teilnehmeridentitätskennung kann in dem Speicher gespeichert sein. Die Teilnehmeridentitätskennung kann eine eID (eUICC-ID) sein.

Gemäß einer Ausführungsform ist der Speicher ausgebildet, das Teilnehmerprofil zu speichern. Das Teilnehmerprofil kann eine IMSI (International Mobile Subscriber Identity) umfassen.

Gemäß einer Ausführungsform ist die Kommunikationsschnittstelle ferner ausgebildet, die Kommunikationsverbindung zu dem Profil-Server bei einer Initialisierung, insbesondere einer erstmaligen Initialisierung, des Teilnehmeridentitätselements aufzubauen. Das Initialisierungsprofil kann folglich zur Initialisierung des Teilnehmeridentitätselements eingesetzt werden. Das Initialisierungsprofil kann ein Bootstrap-Profil sein.

Gemäß einer Ausführungsform ist das Kommunikationsnetzwerk ein Kommunikationsnetzwerk der fünften Generation (5G) oder einer weiteren Generation, wobei das Subnetzwerk ein Slice des Kommunikationsnetzwerkes ist, und wobei die Subnetzwerkkennung eine Slice-Kennung ist.

Gemäß einem zweiten Aspekt betrifft die Erfindung ein Kommunikationsgerät zum Kommunizieren über ein Kommunikationsnetzwerk. Das Kommunikationsgerät umfasst ein Teilnehmeridentitätselement gemäß dem ersten Aspekt der Erfindung, wobei das Teilnehmeridentitätselement ausgebildet ist, das Kommunikationsgerät gegenüber dem Kommunikationsnetzwerk zu authentifizieren. Das Kommunikationsgerät kann ein UE (User Equipment) sein.

Gemäß einem dritten Aspekt betrifft die Erfindung einen Profil-Server zum Kommunizieren mit einem Teilnehmeridentitätselement über ein Kommunikationsnetzwerk, wobei der Profil-Server einem Subnetzwerk des Kommunikationsnetzwerkes zugeordnet ist, und wobei das Teilnehmeridentitätselement ausgebildet ist, eine Kommunikationsverbindung zu dem Profil-Server unter Verwendung einer Subnetzwerkkennung des Subnetzwerks aufzubauen. Der Profil-Server umfasst eine Kommunikationsschnittstelle, welche ausgebildet ist, mit dem Teilnehmeridentitätselement über die Kommunikationsverbindung zu kommunizieren. Der Profil-Server umfasst ferner einen Prozessor, welcher ausgebildet ist, ein Teilnehmerprofil des Teilnehmeridentitätselementes zu bestimmen, wobei das Teilnehmerprofil dem Teilnehmeridentitätselement zugeordnet ist. Die Kommunikationsschnittstelle ist ferner ausgebildet, das Teilnehmerprofil über die Kommunikationsverbindung an das Teilnehmeridentitätselement auszusenden. Der Profil-Server kann ein SMDP (Subscription Manager Data Preparation) Server oder ein SMDP+ (Subscription Manager Data Preparation Plus) Server sein.

Gemäß einer Ausführungsform ist die Kommunikationsschnittstelle ferner ausgebildet, eine Teilnehmeridentitätskennung über die Kommunikationsverbindung von dem Teilnehmeridentitätselement zu empfangen, wobei der Prozessor ferner ausgebildet ist, das Teilnehmerprofil des Teilnehmeridentitätselementes auf der Basis der Teilnehmeridentitätskennung zu bestimmen.

Gemäß einer Ausführungsform umfasst der Profil-Server ferner eine Datenbank, wobei die Datenbank eine Zuordnung einer Mehrzahl von Teilnehmeridentitätskennungen zu einer Mehrzahl von Teilnehmerprofilen anzeigt, wobei jeder Teilnehmeridentitätskennung ein Teilnehmerprofil zugeordnet ist, und wobei der Prozessor ferner ausgebildet ist, die empfangene Teilnehmeridentitätskennung mit der Mehrzahl von Teilnehmeridentitätskennungen zu vergleichen, und ein Teilnehmerprofil von der Datenbank abzurufen, welches der empfangenen Teilnehmeridentitätskennung zugeordnet ist.

Gemäß einem vierten Aspekt betrifft die Erfindung ein Kommunikationssystem zum Kommunizieren über ein Kommunikationsnetzwerk. Das Kommunikationssystem umfasst ein Kommunikationsgerät, wobei das Kommunikationsgerät ein Teilnehmeridentitätselement gemäß dem ersten Aspekt der Erfindung umfasst. Das Kommunikationssystem umfasst ferner einen Profil-Server gemäß dem dritten Aspekt der Erfindung, wobei der Profil-Server einem Subnetzwerk des Kommunikationsnetzwerkes zugeordnet ist.

Gemäß einem fünften Aspekt betrifft die Erfindung ein Subnetzwerk eines Kommunikationsnetzwerkes mit einer Mehrzahl von Subnetzwerken, mit einem Profil-Server gemäß dem dritten Aspekt der Erfindung, welcher in dem Subnetzwerk angeordnet ist und über das Subnetzwerk adressierbar ist. Das Subnetzwerk kann ein Punkt-zu-Punkt Subnetzwerk sein.

Gemäß einer Ausführungsform ist das Kommunikationsnetzwerk ein Kommunikationsnetzwerk der fünften Generation (5G) oder einer weiteren Generation, wobei das Subnetzwerk ein Slice des Kommunikationsnetzwerkes ist, und wobei der Profil-Server unter Verwendung einer Subnetzwerkkennung des Subnetzwerkes adressierbar ist.

Gemäß einem sechsten Aspekt betrifft die Erfindung ein Verfahren zum Authentifizieren eines Kommunikationsgerätes gegenüber einem Kommunikationsnetzwerk unter Verwendung eines Teilnehmeridentitätselementes, wobei das Teilnehmeridentitätselement einen Speicher und eine Kommunikationsschnittstelle umfasst, wobei das Kommunikationsnetzwerk ein Subnetzwerk mit einem Profil-Server umfasst, wobei in dem Speicher ein Initialisierungsprofil des Teilnehmeridentitätselements gespeichert ist, und wobei das Initialisierungsprofil eine Subnetzwerkkennung des Subnetzwerks anzeigt. Das Verfahren umfasst ein Aufbauen einer Kommunikationsverbindung zu dem Profil-Server unter Verwendung der Subnetzwerkkennung durch die Kommunikationsschnittstelle, und ein Abrufen eines Teilnehmerprofils von dem Profil-Server über die Kommunikationsverbindung durch die Kommunikationsschnittstelle. Das Verfahren kann durch das Teilnehmeridentitätselement ausgeführt werden. Weitere Merkmale des Verfahrens resultieren unmittelbar aus den Merkmalen und/oder der Funktionalität des Teilnehmeridentitätselementes.

Gemäß einem siebten Aspekt betrifft die Erfindung ein Verfahren zum Kommunizieren mit einem Teilnehmeridentitätselement über ein Kommunikationsnetzwerk unter Verwendung eines Profil-Servers, wobei der Profil-Server eine Kommunikationsschnittstelle und einen Prozessor umfasst, wobei der Profil-Server einem Subnetzwerk des Kommunikationsnetzwerkes zugeordnet ist, wobei das Teilnehmeridentitätselement ausgebildet ist, eine Kommunikationsverbindung zu dem Profil-Server unter Verwendung einer Subnetzwerkkennung des Subnetzwerks aufzubauen, und wobei die Kommunikationsschnittstelle ausgebildet ist, mit dem Teilnehmeridentitätselement über die Kommunikationsverbindung zu kommunizieren. Das Verfahren umfasst ein Bestimmen eines Teilnehmerprofils des Teilnehmeridentitätselementes durch den Prozessor, wobei das Teilnehmerprofil dem Teilnehmeridentitätselement zugeordnet ist, und ein Aussenden des Teilnehmerprofils über die Kommunikationsverbindung an das Teilnehmeridentitätselement durch die Kommunikationsschnittstelle. Das Verfahren kann durch den Profil-Server ausgeführt werden. Weitere Merkmale des Verfahrens resultieren unmittelbar aus den Merkmalen und/oder der Funktionalität des Profil-Servers.

Gemäß einem achten Aspekt betrifft die Erfindung ein Computerprogramm mit einem Programmcode zum Ausführen des Verfahrens gemäß dem sechsten Aspekt der Erfindung oder des Verfahrens gemäß dem siebten Aspekt der Erfindung, wenn das Computerprogramm auf einem Computer ausgeführt wird. Das Teilnehmeridentitätselement und/oder der Profil-Server können programmtechnisch eingerichtet sein, um das Computerprogramm auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm eines Teilnehmeridentitätselementes zum Authentifizieren eines Kommunikationsgerätes gegenüber einem Kommunikationsnetzwerk;
Fig. 2 ein schematisches Diagramm eines Kommunikationsgerätes zum Kommunizieren über ein Kommunikationsnetzwerk;
Fig. 3 ein schematisches Diagramm eines Profil-Servers zum Kommunizieren mit einem Teilnehmeridentitätselement über ein Kommunikationsnetzwerk;
Fig. 4 ein schematisches Diagramm eines Kommunikationssystems zum Kommunizieren über ein Kommunikationsnetzwerk;
Fig. 5 ein schematisches Diagramm eines Verfahrens zum Authentifizieren eines Kommunikationsgerätes gegenüber einem Kommunikationsnetzwerk unter Verwendung eines Teilnehmeridentitätselementes; und
Fig. 6 ein schematisches Diagramm eines Verfahrens zum Kommunizieren mit einem Teilnehmeridentitätselement über ein Kommunikationsnetzwerk unter Verwendung eines Profil-Servers.

### DETAILIERTE BESCHREIBUNG DER FIGUREN

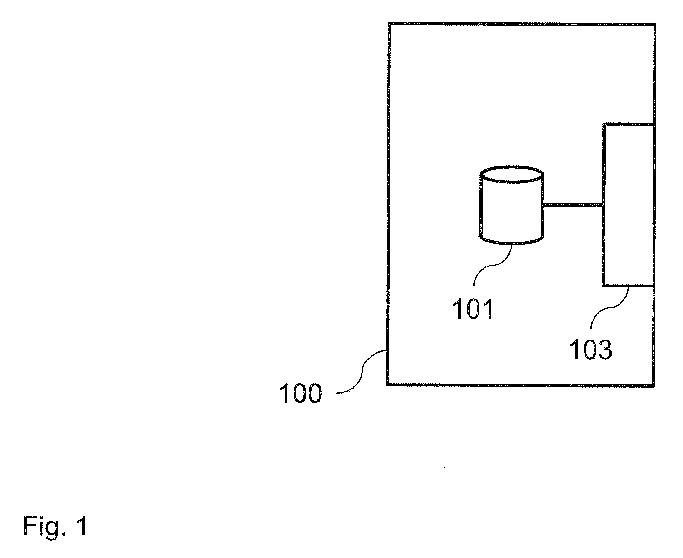

Fig. 1 zeigt ein schematisches Diagramm eines Teilnehmeridentitätselementes 100 zum Authentifizieren eines Kommunikationsgerätes gegenüber einem Kommunikationsnetzwerk. Das Kommunikationsnetzwerk umfasst ein Subnetzwerk mit einem Profil-Server.

Das Teilnehmeridentitätselement 100 umfasst einen Speicher 101, in welchem ein Initialisierungsprofil des Teilnehmeridentitätselements 100 gespeichert ist, wobei das Initialisierungsprofil eine Subnetzwerkkennung des Subnetzwerks anzeigt. Das Teilnehmeridentitätselement 100 umfasst ferner eine Kommunikationsschnittstelle 103, welche ausgebildet ist, eine Kommunikationsverbindung zu dem Profil-Server unter Verwendung der Subnetzwerkkennung aufzubauen, und ein Teilnehmerprofil von dem Profil-Server über die Kommunikationsverbindung abzurufen.

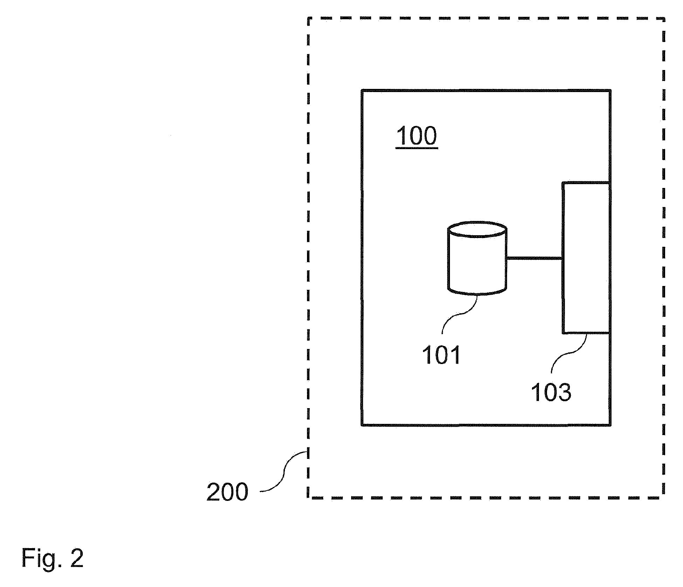

Fig. 2 zeigt ein schematisches Diagramm eines Kommunikationsgerätes 200 zum Kommunizieren über ein Kommunikationsnetzwerk. Das Kommunikationsgerät 200 umfasst ein Teilnehmeridentitätselement 100, wobei das Teilnehmeridentitätselement 100 ausgebildet ist, das Kommunikationsgerät 200 gegenüber dem Kommunikationsnetzwerk zu authentifizieren. Das Kommunikationsnetzwerk umfasst ein Subnetzwerk mit einem Profil-Server.

Das Teilnehmeridentitätselement 100 umfasst einen Speicher 101, in welchem ein Initialisierungsprofil des Teilnehmeridentitätselements 100 gespeichert ist, wobei das Initialisierungsprofil eine Subnetzwerkkennung des Subnetzwerks anzeigt. Das Teilnehmeridentitätselement 100 umfasst ferner eine Kommunikationsschnittstelle 103, welche ausgebildet ist, eine Kommunikationsverbindung zu dem Profil-Server unter Verwendung der Subnetzwerkkennung aufzubauen, und ein Teilnehmerprofil von dem Profil-Server über die Kommunikationsverbindung abzurufen.

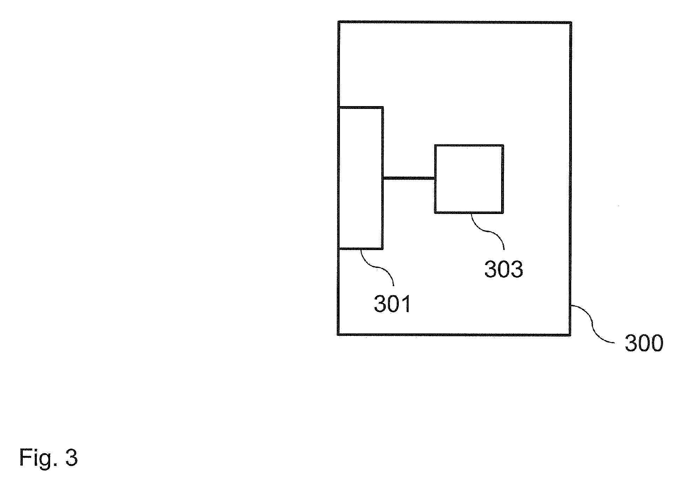

Fig. 3 zeigt ein schematisches Diagramm eines Profil-Servers 300 zum Kommunizieren mit einem Teilnehmeridentitätselement über ein Kommunikationsnetzwerk. Der Profil-Server 300 ist einem Subnetzwerk des Kommunikationsnetzwerkes zugeordnet. Das Teilnehmeridentitätselement ist ausgebildet, eine Kommunikationsverbindung zu dem Profil-Server 300 unter Verwendung einer Subnetzwerkkennung des Subnetzwerks aufzubauen.

Der Profil-Server 300 umfasst eine Kommunikationsschnittstelle 301, welche ausgebildet ist, mit dem Teilnehmeridentitätselement über die Kommunikationsverbindung zu kommunizieren. Der Profil-Server 300 umfasst ferner einen Prozessor 303, welcher ausgebildet ist, ein Teilnehmerprofil des Teilnehmeridentitätselementes zu bestimmen, wobei das Teilnehmerprofil dem Teilnehmeridentitätselement zugeordnet ist. Die Kommunikationsschnittstelle 301 ist ferner ausgebildet, das Teilnehmerprofil über die Kommunikationsverbindung an das Teilnehmeridentitätselement auszusenden.

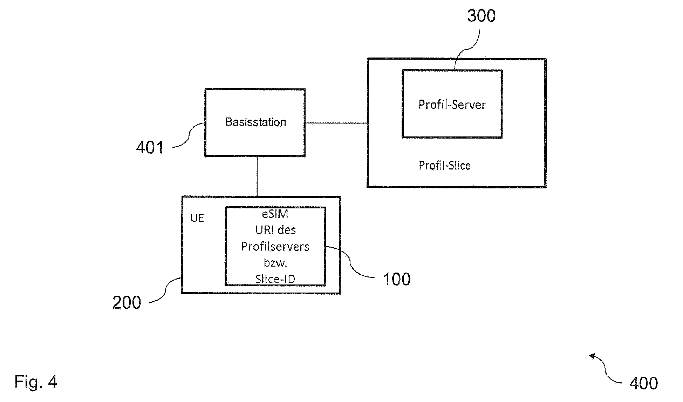

Fig. 4 zeigt ein schematisches Diagramm eines Kommunikationssystems 400 zum Kommunizieren über ein Kommunikationsnetzwerk.

Das Kommunikationssystem 400 umfasst ein Kommunikationsgerät 200, wobei das Kommunikationsgerät 200 ein Teilnehmeridentitätselement 100 umfasst. Das Kommunikationssystem 400 umfasst ferner einen Profil-Server 300, wobei der Profil-Server 300 einem Subnetzwerk des Kommunikationsnetzwerkes zugeordnet ist. Die Kommunikation zwischen dem Teilnehmeridentitätselement 100 und dem Profil-Server 300 erfolgt über eine Basisstation 401 des Kommunikationsnetzwerkes.

Das Subnetzwerk umfasst den Profil-Server 300, welcher in dem Subnetzwerk angeordnet ist und über das Subnetzwerk adressierbar ist. Das Subnetzwerk kann ein Slice bzw. ein Profil-Slice des Kommunikationsnetzwerkes sein.

Zur Initialisierung oder Aktivierung des Teilnehmeridentitätselementes 100, beispielsweise einer eSIM, wird ein Teilnehmerprofil eingesetzt, welches von dem Profil-Server 300, beispielsweise einem SMDP+ Server, heruntergeladen werden kann. Falls der Profil-Server 300 bekannt ist, beispielsweise kann dessen Profil-Serverkennung dem Teilnehmeridentitätselement 100 bekannt sein, kann der Profil-Server 300 unter Verwendung der Profil-Serverkennung, beispielsweise einer URI, direkt kontaktieren werden. Insbesondere für Kommunikationsnetzwerke der fünften Generation (5G) und weiterer Generationen ist eine Bereitstellung eines Profil-Dienstes wünschenswert.

Anstatt eines isolierten Profil-Servers 300 kann ein Subnetzwerk des Kommunikationsnetzwerkes mit dem Profil-Server 300 bereitgestellt werden. Gemäß einer Ausführungsform wird ein Slice, beispielsweise ein Profil-Slice, eingesetzt, in welchem Teilnehmerprofile von Teilnehmeridentitätselementen verwaltet werden.

Zum Abrufen eines Teilnehmerprofils kann dem Teilnehmeridentitätselement 100 eine Subnetzwerkkennung, beispielsweise eine Slice-Kennung, des Subnetzwerkes bekannt sein. Diese kann in einem Initialisierungsprofil, beispielsweise einem Bootstrap-Profil, integriert sein. Beim Einbuchen in das Kommunikationsnetzwerk kann die Basisstation 401 das Kommunikationsgerät 200 in das Subnetzwerk, beispielsweise das Profil-Slice, routen. In dem Subnetzwerk können ein oder mehrere Profil-Server bereitgestellt sein. Das Routing in das Subnetzwerk kann mittels der Subnetzwerkkennung erfolgen, welche beispielsweise in dem Initialisierungsprofil abgelegt ist.

Das Subnetzwerk, beispielsweise das Slice, kann einfacher verwaltet werden als dezentral angeordnete Profil-Server. Zudem kann lediglich die Subnetzwerkkennung, beispielsweise die Slice-Kennung, für eine initiale Einbuchung des Kommunikationsgerätes 200 verwendet werden. Dadurch kann sich ferner die Systemsicherheit erhöhen, da die Profil-Server in dem Subnetzwerk, insbesondere der Slice, versteckt sein können. Dies kann beispielsweise mittels eines Proxyservers realisiert werden.

Ferner kann eine weitere Netzwerkinstanz in dem Subnetzwerk, beispielsweise dem Slice, dem Profil-Server 300 vorgeschaltet sein, um eine direkte Kommunikation zwischen dem Kommunikationsgerät 200 und dem Profil-Server 300 zu unterbinden, oder um ein Roaming des Kommunikationsgerätes 200 zu unterbinden, falls sich das Kommunikationsgerät 200 im Ausland befindet.

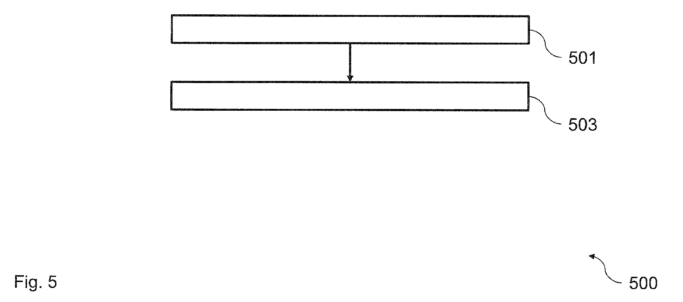

Fig. 5 zeigt ein schematisches Diagramm eines Verfahrens 500 zum Authentifizieren eines Kommunikationsgerätes gegenüber einem Kommunikationsnetzwerk unter Verwendung eines Teilnehmeridentitätselementes. Das Teilnehmeridentitätselement umfasst einen Speicher und eine Kommunikationsschnittstelle. Das Kommunikationsnetzwerk umfasst ein Subnetzwerk mit einem Profil-Server. In dem Speicher ist ein Initialisierungsprofil des Teilnehmeridentitätselements gespeichert, wobei das Initialisierungsprofil eine Subnetzwerkkennung des Subnetzwerks anzeigt.

Das Verfahren 500 umfasst ein Aufbauen 501 einer Kommunikationsverbindung zu dem Profil-Server unter Verwendung der Subnetzwerkkennung durch die Kommunikationsschnittstelle, und ein Abrufen 503 eines Teilnehmerprofils von dem Profil-Server über die Kommunikationsverbindung durch die Kommunikationsschnittstelle.

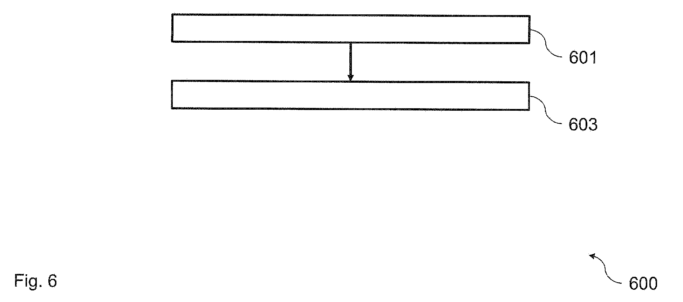

Fig. 6 zeigt ein schematisches Diagramm eines Verfahrens 600 zum Kommunizieren mit einem Teilnehmeridentitätselement über ein Kommunikationsnetzwerk unter Verwendung eines Profil-Servers. Der Profil-Server umfasst eine Kommunikationsschnittstelle und einen Prozessor. Der Profil-Server ist einem Subnetzwerk des Kommunikationsnetzwerkes zugeordnet. Das Teilnehmeridentitätselement ist ausgebildet, eine Kommunikationsverbindung zu dem Profil-Server unter Verwendung einer Subnetzwerkkennung des Subnetzwerks aufzubauen. Die Kommunikationsschnittstelle ist ausgebildet, mit dem Teilnehmeridentitätselement über die Kommunikationsverbindung zu kommunizieren.

Das Verfahren 600 umfasst ein Bestimmen 601 eines Teilnehmerprofils des Teilnehmeridentitätselementes durch den Prozessor, wobei das Teilnehmerprofil dem Teilnehmeridentitätselement zugeordnet ist, und ein Aussenden 603 des Teilnehmerprofils über die Kommunikationsverbindung an das Teilnehmeridentitätselement durch die Kommunikationsschnittstelle.

### BEZUGSZEICHENLISTE

- 100: Teilnehmeridentitätselement
- 101: Speicher
- 103: Kommunikationsschnittstelle

- 200: Kommunikationsgerät

- 300: Profil-Server
- 301: Kommunikationsschnittstelle
- 303: Prozessor

- 400: Kommunikationssystem
- 401: Basisstation

- 500: Verfahren zum Authentifizieren
- 501: Aufbauen
- 503: Abrufen

- 600: Verfahren zum Kommunizieren
- 601: Bestimmen
- 603: Aussenden

## Patentansprüche

1. Teilnehmeridentitätselement (100) zum Authentifizieren eines Kommunikationsgerätes (200) gegenüber einem Kommunikationsnetzwerk, wobei das Kommunikationsnetzwerk ein Subnetzwerk mit einem Profil-Server (300) umfasst, mit:
einem Speicher (101), in welchem ein Initialisierungsprofil des Teilnehmeridentitätselements (100) gespeichert ist, wobei das Initialisierungsprofil eine Subnetzwerkkennung des Subnetzwerks anzeigt; und
einer Kommunikationsschnittstelle (103), welche ausgebildet ist, eine Kommunikationsverbindung zu dem Profil-Server (300) unter Verwendung der Subnetzwerkkennung aufzubauen, und ein Teilnehmerprofil von dem Profil-Server (300) über die Kommunikationsverbindung abzurufen.

2. Teilnehmeridentitätselement (100) nach Anspruch 1, wobei dem Profil-Server (300) eine Profil-Serverkennung zugeordnet ist, wobei das Initialisierungsprofil ferner die Profil-Serverkennung anzeigt, und wobei die Kommunikationsschnittstelle (103) ferner ausgebildet ist, die Kommunikationsverbindung zu dem Profil-Server (300) unter Verwendung der Profil-Serverkennung aufzubauen.

3. Teilnehmeridentitätselement (100) nach Anspruch 2, wobei die Profil-Serverkennung ein Uniform Resource Identifier (URI) des Profil-Servers (300) ist.

4. Teilnehmeridentitätselement (100) nach einem der vorstehenden Ansprüche, wobei dem Teilnehmeridentitätselement (100) eine Teilnehmeridentitätskennung zugeordnet ist, und wobei die Kommunikationsschnittstelle (103) ausgebildet ist, die Teilnehmeridentitätskennung an den Profil-Server (300) über die Kommunikationsverbindung auszusenden.

5. Teilnehmeridentitätselement (100) nach einem der vorstehenden Ansprüche, wobei der Speicher (101) ausgebildet ist, das Teilnehmerprofil zu speichern.

6. Teilnehmeridentitätselement (100) nach einem der vorstehenden Ansprüche, wobei die Kommunikationsschnittstelle (103) ferner ausgebildet ist, die Kommunikationsverbindung zu dem Profil-Server (300) bei einer Initialisierung, insbesondere einer erstmaligen Initialisierung, des Teilnehmeridentitätselements (100) aufzubauen.

7. Teilnehmeridentitätselement (100) nach einem der vorstehenden Ansprüche, wobei das Kommunikationsnetzwerk ein Kommunikationsnetzwerk der fünften Generation (5G) oder einer weiteren Generation ist, wobei das Subnetzwerk ein Slice des Kommunikationsnetzwerkes ist, und wobei die Subnetzwerkkennung eine Slice-Kennung ist.

8. Kommunikationsgerät (200) zum Kommunizieren über ein Kommunikationsnetzwerk, mit:
einem Teilnehmeridentitätselement (100) nach einem der Ansprüche 1 bis 7, wobei das Teilnehmeridentitätselement (100) ausgebildet ist, das Kommunikationsgerät (200) gegenüber dem Kommunikationsnetzwerk zu authentifizieren.

9. Profil-Server (300) zum Kommunizieren mit einem Teilnehmeridentitätselement (100) über ein Kommunikationsnetzwerk, wobei der Profil-Server (300) einem Subnetzwerk des Kommunikationsnetzwerkes zugeordnet ist, wobei das Teilnehmeridentitätselement (100) ausgebildet ist, eine Kommunikationsverbindung zu dem Profil-Server (300) unter Verwendung einer Subnetzwerkkennung des Subnetzwerks aufzubauen, mit:
einer Kommunikationsschnittstelle (301), welche ausgebildet ist, mit dem Teilnehmeridentitätselement (100) über die Kommunikationsverbindung zu kommunizieren; und
einem Prozessor (303), welcher ausgebildet ist, ein Teilnehmerprofil des Teilnehmeridentitätselementes (100) zu bestimmen, wobei das Teilnehmerprofil dem Teilnehmeridentitätselement (100) zugeordnet ist;
wobei die Kommunikationsschnittstelle (301) ferner ausgebildet ist, das Teilnehmerprofil über die Kommunikationsverbindung an das Teilnehmeridentitätselement (100) auszusenden.

10. Profil-Server (300) nach Anspruch 9, wobei die Kommunikationsschnittstelle (301) ferner ausgebildet ist, eine Teilnehmeridentitätskennung über die Kommunikationsverbindung von dem Teilnehmeridentitätselement (100) zu empfangen, und wobei der Prozessor (303) ferner ausgebildet ist, das Teilnehmerprofil des Teilnehmeridentitätselementes (100) auf der Basis der Teilnehmeridentitätskennung zu bestimmen.

11. Profil-Server (300) nach Anspruch 10, wobei der Profil-Server (300) ferner eine Datenbank umfasst, wobei die Datenbank eine Zuordnung einer Mehrzahl von Teilnehmeridentitätskennungen zu einer Mehrzahl von Teilnehmerprofilen anzeigt, wobei jeder Teilnehmeridentitätskennung ein Teilnehmerprofil zugeordnet ist, und wobei der Prozessor (303) ferner ausgebildet ist, die empfangene Teilnehmeridentitätskennung mit der Mehrzahl von Teilnehmeridentitätskennungen zu vergleichen, und ein Teilnehmerprofil von der Datenbank abzurufen, welches der empfangenen Teilnehmeridentitätskennung zugeordnet ist.

12. Kommunikationssystem (400) zum Kommunizieren über ein Kommunikationsnetzwerk, mit:
einem Kommunikationsgerät (200), wobei das Kommunikationsgerät (200) ein Teilnehmeridentitätselement (100) nach einem der Ansprüche 1 bis 7 umfasst; und
einem Profil-Server (300) nach einem der Ansprüche 9 bis 11, wobei der Profil-Server (300) einem Subnetzwerk des Kommunikationsnetzwerkes zugeordnet ist.

13. Subnetzwerk eines Kommunikationsnetzwerkes mit einer Mehrzahl von Subnetzwerken, mit:
einem Profil-Server nach einem der Ansprüche 9 bis 11, welcher in dem Subnetzwerk angeordnet ist und über das Subnetzwerk adressierbar ist.

14. Verfahren (500) zum Authentifizieren eines Kommunikationsgerätes (200) gegenüber einem Kommunikationsnetzwerk unter Verwendung eines Teilnehmeridentitätselementes (100), wobei das Teilnehmeridentitätselement (100) einen Speicher (101) und eine Kommunikationsschnittstelle (103) umfasst, wobei das Kommunikationsnetzwerk ein Subnetzwerk mit einem Profil-Server (300) umfasst, wobei in dem Speicher (101) ein Initialisierungsprofil des Teilnehmeridentitätselements (100) gespeichert ist, und wobei das Initialisierungsprofil eine Subnetzwerkkennung des Subnetzwerks anzeigt, mit:
Aufbauen (501) einer Kommunikationsverbindung zu dem Profil-Server (300) unter Verwendung der Subnetzwerkkennung durch die Kommunikationsschnittstelle (103); und
Abrufen (503) eines Teilnehmerprofils von dem Profil-Server (300) über die Kommunikationsverbindung durch die Kommunikationsschnittstelle (103).

15. Verfahren (600) zum Kommunizieren mit einem Teilnehmeridentitätselement (100) über ein Kommunikationsnetzwerk unter Verwendung eines Profil-Servers (300), wobei der Profil-Server (300) eine Kommunikationsschnittstelle (301) und einen Prozessor (303) umfasst, wobei der Profil-Server (300) einem Subnetzwerk des Kommunikationsnetzwerkes zugeordnet ist, wobei das Teilnehmeridentitätselement (100) ausgebildet ist, eine Kommunikationsverbindung zu dem Profil-Server (300) unter Verwendung einer Subnetzwerkkennung des Subnetzwerks aufzubauen, und wobei die Kommunikationsschnittstelle (301) ausgebildet ist, mit dem Teilnehmeridentitätselement (100) über die Kommunikationsverbindung zu kommunizieren, mit:
Bestimmen (601) eines Teilnehmerprofils des Teilnehmeridentitätselementes (100) durch den Prozessor (303), wobei das Teilnehmerprofil dem Teilnehmeridentitätselement (100) zugeordnet ist; und
Aussenden (603) des Teilnehmerprofils über die Kommunikationsverbindung an das Teilnehmeridentitätselement (100) durch die Kommunikationsschnittstelle (301).

16. Computerprogramm mit einem Programmcode zum Ausführen des Verfahrens (500) nach Anspruch 14 oder des Verfahrens (600) nach Anspruch 15, wenn das Computerprogramm auf einem Computer ausgeführt wird.
